# EUROPEAN PATENT APPLICATION

(11) **EP 3 183 955 A1**
(43) Date of publication of application: **28.06.2017**
(21) Application number: 16201103.5
(22) Date of filing: 29.11.2016
(51) Int. Cl.: A01J 11/16, C02F 1/02

(54) **A HEAT EXCHANGER ARRANGEMENT AND METHOD FOR PROVIDING PROCESS WATER TO A PISTON PUMP OR A HOMOGENIZER**

(30) Priority: 21.12.2015 SE 1551691
(71) Applicant: Tetra Laval Holdings & Finance S.A., 1009 Pully (CH)
(72) Inventor: JOHANSSON, Fredrik, 22760 Lund (SE); GUNNARSSON, Fredrik, 243 94 Höör (SE)
(74) Representative: Tetra Pak - Patent Attorneys SE

(57) **Abstract**

The present invention relates to a method and a heat exchanger arrangement (3, 5) for a dairy processing system, to provide process water to a piston pump or a homogenizer comprised in the dairy processing system. The arrangement comprises an injection port (12, 13, 14) arranged to inject condensate into in at least one of the inlet conduit (1), the by-pass conduit (11), and the third conduit (10), in order to reduce the amount of water and/or energy required to heat the water, and the method comprises the step of injection condensate into the flow of water.

## Description

### Technical field

The invention generally relates to the field of heat exchangers for a dairy process system, more particularly to a heat exchanger arrangement and a method for providing process water to a piston pump or a homogenizer comprised in a dairy processing system.

### Background art

Piston pumps are, for example, used for homogenizers, where they generate the enormous pressure which is required for the homogenization process. Homogenization entails that the product, such as for example milk, which is to be homogenized is forced at high pressure through a narrow gap and the fat globules which exist in the product are atomized after the passage through the gap.

Those homogenizers which are used for foods such as dairy produce are provided with double piston seals. This is to ensure that product and surrounding air do not come into contact with one another. In order to cool and lubricate these seals, they are sprayed constantly with water or some other liquid, which implies a not inconsiderable consumption of the spraying liquid.

In those cases when the homogenizer in a plant is positioned after the sterilizer in an aseptic process, the liquid, such as water, must moreover be sterile and not below a certain temperature in order to avoid re-infection of the product.

Available on the market today, there are a number of different methods for obtaining sterile water or other liquid for spraying of the pistons. The most common method is to condense steam, which implies considerable steam consumption and consumption of cooling water for the condensation. In such instance, the common practice is to spray with a condensate which is at 110°C, which means that piston seals which can withstand this temperature must be used. The high temperatures restrict the possible choice of materials for the piston seals.

Another method is to cool steam with cooling water to a temperature of 40-60°C. This method requires further consumption of water. The advantage inherent in a lower temperature of the condensate is that it is possible to use other materials for the piston seals. These materials mean that a longer service life will be obtained for the piston seals.

A third method of sterilizing water for piston pumps and homogenizers is described in European Patent Specification EP 1 875 818. According to this method, the water is filtered so that it becomes sterile. This method implies a reduced consumption of steam and cooling water, but it does involve major investment costs.

WO2011/002376 describes an improved apparatus and method which reduces the required energy and water needed to provide sterilized water for spraying into the piston pump or homogenizer.

However, there is still a desire to improve the state of the art to provide for an apparatus or method which provides water for the piston pump or homogenizer using fewer resources such as energy and/or water.

### Summary of the invention

It is an object of the present invention to improve the current state of the art, to alleviate at least some of the above problems, and to provide an improved heat exchanger arrangement.

According to a first aspect of the present invention, a heat exchanger arrangement for a dairy processing system is provided. The heat exchanger arrangement is configured to provide process water to a piston pump or a homogenizer comprised in the dairy processing system. The heat exchanger arrangement comprises:
an inlet conduit for providing incoming water to the heat exchanger arrangement;
a first heat exchanger and a second heat exchanger;
the first heat exchanger being configured to heat the incoming water with sterilized water to provide intermediate water, and to cool the sterilized water with the incoming water to provide process water;
a first conduit fluidly connecting the first heat exchanger and the second heat exchanger for transporting the intermediate water from the first heat exchanger to the second heat exchanger;
a by-pass conduit fluidly connecting the inlet conduit and the first conduit;
the second heat exchanger being arranged to receive and heat the intermediate water to at least 121°C in order to provide the sterilized water;
a second conduit fluidly connecting the second heat exchanger and the first heat exchanger for transporting the sterilized water from the second heat exchanger to the first heat exchanger;
a third conduit fluidly connecting the first heat exchanger and the piston pump or homogenizer; and
wherein the heat exchanger arrangement further comprises:
   an injection port arranged to inject condensate into in at least one of the inlet conduit, the by-pass conduit, and the third conduit, in order to reduce the amount of water and/or energy required to heat the incoming water and/or intermediate water.

The present invention is based on the realization that the resources required, i.e. energy for heating and water, for providing process water for cooling a piston pump or a homogenizer in a dairy processing system may be further reduced by including an injection port to inject condensate into a portion of a heat exchanger arrangement. Hereby, it should be understood that the present invention is at least partly based on the disclosure of WO2011/002376, hereby incorporated by reference. Hence, the process water provided by the present invention may also be sprayed continuously or intermittently over the piston rings of a piston pump or homogenizer.

The term condensate should herein and henceforth be construed as water from another portion of a dairy processing system which would otherwise be considered as spill water or waste water. Hence, in the present invention such water is instead recycled and the inherent thermal energy within such water may also contribute to save energy which would otherwise be needed to heat the incoming water. Although the term condensate indicates that the water is originates from cooled steam, other sources are possible and within the scope of this invention. The term sterilized condensate should thus be understood as water from another portion of a dairy processing system which is known to be sterile and has been handled under sterile and aseptic conditions.

It should be understood that in the second heat exchanger, the intermediate water is heated and sterilized in order to provide the sterilized water. The first and second heat exchangers are understood to keep the flow of waters separate in order not to contaminate e.g. the sterilized water with incoming water.

For example, the condensate may originate from at least one of a plate heat exchanger, a vacuum pump, a tubular heat exchanger as a pre-heater, a tubular heat exchanger as a cooler, and a tubular heat exchanger as final heater in a dairy processing system. Examples of different dairy processing system where the present invention would be suitable are e.g. given in Dairy Processing Handbook (ISBN: 91-631-3427-6).

Preferably, the condensate is provided to the injection port at a temperature of 30° C or higher. The higher the temperature of the condensate, the less thermal energy is needed to provide the process water.

The piston pump or the homogenizer should be understood to be placed after a sterilization process of the dairy product produced in the dairy processing system. This means that there is a requirement that the piston pump and/or the homogenizer stays sterile.

The injection port is arranged to inject condensate into in at least one of the inlet conduit, the by-pass conduit, and the third conduit. Hence, there may be only one injection port arranged in one of the inlet conduit, the by-pass conduit, and the third conduit, and the condensate is, regardless of the temperature of the condensate, injected where the injection port is positioned.

In at least one exemplary embodiment, there may be more than one injection port, i.e. two or three injection ports, arranged at more than one of the inlet conduit, the by-pass conduit, and the third conduit. In at least one embodiment, the heat exchanger arrangement may further comprise a selection and direction device adapted to measure the temperature of the condensate, and direct the condensate to at least one of the inlet conduit, the by-pass conduit, and the third conduit based on the temperature of the condensate. In other words, a condensate, in particular a sterilized condensate, having temperature in the range of 75-110° C may be injected into the third conduit for being provided as process water to the piston pump or homogenizer. A condensate having a lower temperature, i.e. below the range of 75-110° C, may be injected into the inlet conduit or the by-pass conduit.

In at least one exemplary embodiment, the heat exchanger arrangement further comprises a holding cell arranged in fluid contact with the second conduit, the holding cell being configured to hold the sterilized water for a predetermined amount of time. By holding the sterilized water for a predetermined period of time, the sterilization of the water may be further ensured. Stated differently, there may be a requirement to hold the water above 121 ° C for a predetermined amount of time in order to ensure that the water is sufficiently sterilized to be used on the piston rings of a piston pump or homogenizer.

In at least one exemplary embodiment, the heat exchanger arrangement further comprises a third heat exchanger being configured to heat the water in the by-pass conduit by using the condensate. Advantageously, the thermal energy of the condensate may also be used to heat the water in the by-pass conduit.

In at least one exemplary embodiment, the first heat exchanger is configured to cool the sterilized water to a temperature exceeding 75° C. This means that other types of materials for the piston seals may be used, which may improve the sealing and/or the aseptic function, and thereby the efficiency of the piston pump. In at least one exemplary embodiment, the first heat exchanger is configured to cool the sterilized water to a temperature exceeding 75° C and below 110° C.

According to at least a second aspect of the present invention, a method for providing process water to a piston pump or a homogenizer comprised in a dairy processing system is provided. The method comprises the steps of:
directing a flow of incoming water through a first heat exchanger for heating the incoming water to provide a flow of intermediate water;
directing the flow of intermediate water through a second heat exchanger for heating the intermediate water to at least 121°C in order to provide a flow of sterilized water;
directing the flow of sterilized water through the first heat exchanger in order to cool the flow of sterilized water to provide process water; and
injecting condensate into at least one of the flow of incoming water, the flow of intermediate water, and the flow of process water.

Effects and features of this second aspect of the present invention are largely analogous to those described above in connection with the first aspect of the inventive concept. Hence, the injection a condensate may redue the required water and energy in a heat exchanger. Embodiments mentioned in relation to the first aspect of the present invention are largely compatible with the second aspect of the invention, of which some embodiments are explicitly mentioned in the following.

Directing should herein and henceforth be understood as directing or guiding a flow, which may for example be achieved with transport lines or conduits, such as pipes or the like.

In at least one exemplary embodiment, the method further comprises the step of directing at least a portion of the flow of incoming water to by-pass the first heat exchanger into the flow of intermediate water. In order to ensure that the process water has a sufficiently high temperature of at least 75°C, which exceeds the pasteurization temperature, it may not be possible to direct all the incoming water through the first heat exchanger. A temperature of at least 75°C reduces the risk of re-infection.

In at least one exemplary embodiment, the step of injecting condensate comprises injecting condensate into the flow of process water after the first heat exchanger. Hence, a condensate having a sufficiently high temperature and known to be sterile, may be injected directly into the process water. Preferably, such condensate has a temperature in the range of 75-110° C.

In at least one exemplary embodiment, the step of injecting condensate comprises injecting the condensate into the flow of incoming water prior to the first heat exchanger.

In at least one exemplary embodiment, the step of injecting condensate into the flow of water comprises injecting the condensate into a by-pass flow. Hence, in the case that a portion of the incoming water is directed to by-pass the first heat exchanger, the condensate may be injected into such an by-pass flow.

In at least one exemplary embodiment, the condensate is sterilized condensate. In at least one exemplary embodiment, the condensate originates from at least one of a plate heat exchanger, a vacuum pump, a tubular heat exchanger as a pre-heater, a tubular heat exchanger as a cooler, and a tubular heat exchanger as final heater.

In at least one exemplary embodiment, the method further comprises the step of holding the flow of sterilized water for a predetermined amount of time. Holding the sterilized water for a predetermined amount of time, on the order of minutes or several seconds, may ensure that the sterilized water is sterile.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Figure 1 is a flow diagram showing the components of a heat exchanger arrangement according to an embodiment of the invention.
Figure 2 is a flow diagram showing the components of a heat exchanger arrangement according to another embodiment of the invention.

### Detailed description of preferred embodiments of the invention

In the present detailed description, embodiments of a heat exchanger arrangement for providing process water to a piston pump or homogenizer and a method for providing process water to a piston pump or homogenizer are mainly discussed with reference to flow diagram showing a heat exchanger arrangement according to various embodiments of the invention. It should be noted that this by no means limits the scope of the invention, which is also applicable in other circumstances for instance with other types or variants of tubular heat exchangers or devices than the embodiments shown in the appended drawings. Further, that specific components are mentioned in connection to an embodiment of the invention does not mean that those components cannot be used to an advantage together with other embodiments of the invention.

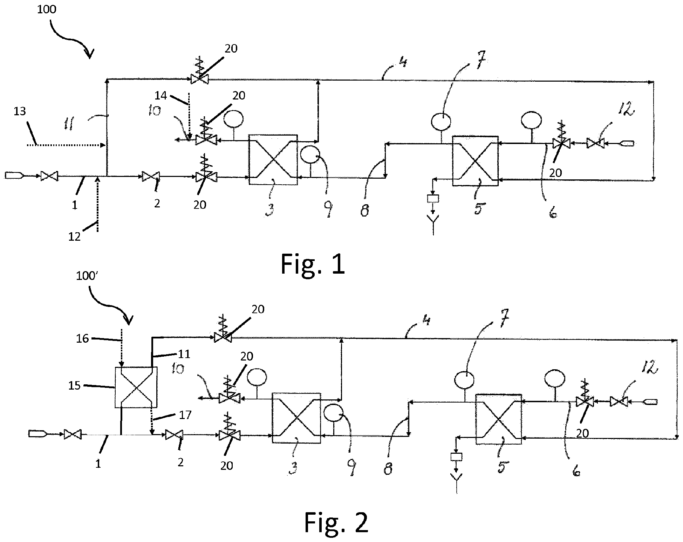

Figure 1 shows a flow diagram of a heat exchanger arrangement 100 of the present invention. Incoming water which is to be sterilized enters into the arrangement through the inlet conduit 1. The incoming water is typically cold. The temperature of the incoming water may be in the range 0-25° C. The incoming water may have a higher temperature. The inlet conduit 2 directs the incoming water to a first heat exchanger 3 via a shut-off valve 2. The first heat exchanger 3 is preferably a plate heat exchanger, but other types of heat exchangers are of course possible to use within the scope of the invention, such as tubular heat exchangers and the like.

In the first heat exchanger 3, a first portion of the incoming water is heated by sterilized water which has already been heated up. A second portion of the incoming water is led past the first heat exchanger 3 via the by-pass conduit 11. The incoming water flow is divided into two flows in order not to obtain excessively large cooling effect on the sterilized water which passes the first heat exchanger 3 on its way to spraying the pistons.

The water heated up in the first heat exchanger 3 becomes intermediate water, i.e. water heated to an intermediate temperature. The intermediate temperature is in the range of 0-121° C. The intermediate water is directed through the conduit 4 and is converged, i.e. combined, with the incoming water from the by-pass conduit 11.

The conduit 4 leads the water to a second heat exchanger 5. The heat exchanger 5 is preferably a plate heat exchanger, but other types of heat exchangers are of course possible to use within the scope of the invention, such as tubular heat exchangers and the like.

The second heat exchanger 5 heats the intermediate water utilizing steam. It should of course be noted that other sources of heat heating forms are also possible. The steam enters the heat exchanger 5 through a steam conduit 6. The second heat exchanger 5 heats the water to at least 121° C in order to sterilize the water. That the sterilized water has achieved a correct temperature is monitored by means of the temperature gauge 7. Since the water into the second heat exchanger 5 is already heated by the first heat exchanger 3, the steam consumption, i.e. both energy and water, in the second heat exchanger 5 is reduced.

Subsequent to the second heat exchanger 5, the sterilized water is led to a holding cell 8. The holding cell 8 may e.g. be designed as a helical conduit, or alternatively consist of a straight conduit section. In the holding cell 8, the sterilized water, at a temperature of at least 121° C, is held for a predetermined period of time. The higher the temperature the water has at a specific flow, the shorter is the time that the water needs to stay in the holding cell 8 in order to fulfill requirement for sterilization. It should be noted that the holding cell 8 is an optional component of the heat exchanger arrangement.

The temperature of the sterilized water departing from the holding cell 8 monitored by the temperature gauge 9 to check that a temperature above 121°c is maintained. The sterilized water is thereafter led into the first heat exchanger 3, where the sterilized water heats the first part of the incoming water entering the first heat exchanger 3. The reason for not directing all of the incoming water through the first heat exchanger 3, is that there is a risk of obtaining an excessive cooling effect on the sterilized water.

After the sterilized water has been cooled it leaves the first heat exchanger 3 as process water having a temperature of at least 75° C. It is this process water, which is sterile, that is transported in the conduit 10 to be sprayed onto a piston pump or a homogenizer (not shown), and thereby provide the process water for continuous spraying of the pistons. The conduit 10 may be in the direct vicinity of the piston pump or the homogenizer, so that the process water can spray the pistons at a temperature of at least 75° C without risk of lowering the temperature.

Since the process water is at a temperature of at least 75°C, which exceeds the pasteurization temperature, the risk of re-infection is reduced. At the same time, the temperature is lower than the temperature obtained in some known prior art methods which involves the condensation of steam. As a result of the lower temperature, it is possible to use piston seal material with several times longer service life, at the same time as consumption of steam and water will be substantially reduced. Compared with a method which condensates steam, the water consumption involved in the method according to the present invention will be approximately 75% lower and the steam consumption will be approximately 50% lower.

The heat exchanger arrangement 100 further comprises an injection port 12, 13, 14 arranged to inject condensate into in at least one of the inlet conduit, the by-pass conduit, and the third conduit.

The injection ports 12, 13, 14 in the figure are illustrated by dashed lines to indicate that the heat exchanger arrangement 100 may comprise just one of the injections ports, or two, or all three injections ports 12, 13, 14.

The condensate is water from another portion of a dairy processing system which would otherwise be considered as spill water or waste water. The condensate has a temperature in the range of 10-150° C. Preferably, the condensate has a temperature of at least 30° C. The heat exchanger arrangement 100 may further comprise shut-off valves and temperature gauges (not shown) connected to the injection ports 12, 13, 14 to monitor the temperature of the condensate and determine whether the condensate should be injected or not. The injection ports 12, 13, 14 may be T-connections.

During operation of the heat exchanger arrangement 100 a condensate is thus injected through e.g. the injection port 12 arranged to inject condensate into the inlet conduit 1. The amount of incoming water required is thus reduced, and the amount of heating which is needed is reduced based on the relative temperature of the condensate compared to the incoming water already present in the inlet conduit 1. For example, the amount of steam required to heat the intermediate water in the second heat exchanger 5 is reduced. Alternatively, a condensate may be injected into the by-pass conduit 11 through the injection port 13. This also reduces the required amount of incoming water as well as energy needed to heat the intermediate water. Alternatively, the condensate may be known to be sterile and has a temperature in the range of 75-110° C, which means that the condensate may be injected into the third conduit 10 as process water for being sprayed onto the pistons. This may be ensured by using temperature gauges and shut-off valves, i.e. the condensate is prevented from being injected into the third conduit 10 by closing a shut-off valve if the temperature is not in the range of 75- 110° C.

In embodiments where the heat exchanger arrangement 100 comprises more than one injection port, the heat exchanger arrangement 100 may also further comprise a selection and direction device (not shown) adapted to measure the temperature of the condensate, and direct the condensate to one of the injection ports 12, 13, 14 included into such an embodiment. Hence, the condensate may be injected into at least one of the inlet conduit 1, the by-pass conduit 11, and the third conduit 10 based on the temperature of the condensate. Hence, a condensate with a sufficiently high temperature, i.e. in the range of 75-110° C, and known to be sterile may be directed to the injection port 14 to the third conduit 10 and otherwise to the injection port 13 into the by-pass conduit or the injection port 12 to the inlet conduit 1.

The heat exchanger arrangement 100 is configured to provide process water to a piston pump or a homogenizer comprised in the dairy processing system. The process water, i.e. the sterilized water provided from the heat exchanger arrangement 100 is to be used for spraying the pistons in a piston pump or a homogenizer.

The heat exchanger arrangement 100 may also be used during sterilization of the piston space between the piston seals in connection with the remaining sterilization of the equipment on production start-up. To perform such a method, the incoming water entering into the inlet conduit 1 is directed through the by-pass conduit 11 by closing a shut-off valve 2. The incoming water is thus led through the by-pass conduit 11, and the first conduit 4 to the second heat exchanger 5.

In the second heat exchanger 5, the water is heated to at least 121° C and is allowed to remain in the holding cell 8 at this temperature for a predetermined period of time. The sterilized water is then directed through the first heat exchanger 3 without any cooling medium in the first heat exchanger 3. Thus, the sterilized water is still at a temperature of at least 121° C when it is led in the conduit 10 to the piston pump or the homogenizer and an efficient sterilization of the space between the piston seals may thereby be obtained. Hence, it is understood that a condensate may be used to advantage by being injected into any of the injection ports 12, 13, 14 during such a sterilization method.

The heat exchanger arrangement 100 may also be used during cleaning in process, CIP, i.e. when the dairy processing system of which the piston pump or homogenizer is a part of is to be cleaned. A valve 12 on the steam supply conduit 6 is closed and no steam, or other type of heating medium, is fed to the second heat exchanger 5. incoming water from the inlet conduit 1 thus passes through the arrangement. Thereby, a further reduction of the steam consumption will be obtained and the thermal loading on the piston seals is further reduced. It is thus understood that condensate may be used to advantage by being injected into any of the injection ports 12, 13, 14 also during such a sterilization method.

Figure 2 shows a flow diagram of another heat exchanger arrangement 100'. The heat exchanger arrangement 100' is similar to the heat exchanger arrangement 100 shown in figure 1, and elements having the same reference numeral are the same as described above in conjunction with figure 1. A difference between the heat exchanger arrangement 100 shown in figure 1 and the heat exchanger arrangement 100' shown in figure 2 is that the heat exchanger arrangement 100' further comprises a third heat exchanger 15 arranged to heat incoming water flowing through the by-pass conduit 11. The heat exchanger arrangement 100' receives condensate from a condensate conduit 16 into the third heat exchanger 15. After the condensate has heated the incoming water in the third heat exchanger 15, the condensate is directed through injection port 17 into the inlet conduit 1. Hence, the condensate may be used both to heat the incoming water in the by-pass flow, and be injected into the inlet conduit 1.

The heat exchanger arrangements 100, 100' may further comprises additional valves 20 as indicated in figure 1 and 2. The additional valves 20 may be control valves, or shut-off valves. The additional valves 20 may be used to control the amount of water flowing through the conduits, or shut-off the conduits.

It should be noted that the conduits and heat exchangers which are part of the heat exchanger arrangements 100, 100' are configured such that they may withstand several bars of pressure. Hence, it should be understood that water at a temperature of e.g. 121° C is also pressurized water. Pressurized water is water at a pressure above atmospheric pressure.

As will have been apparent from the foregoing description, the present invention realizes a heat exchanger arrangement and method for continuously sterilizing the water which is used for spraying the pistons in a piston pump or a homogenizer. The arrangement and method may provide a substantially reduction of consumption of energy, e.g. steam, and water compared with the prior art. Further, the heat exchanger arrangement for carrying out the method is relatively non-complex and does not require any specifically manufactured parts and thus major investment costs.

The size, or diameter of each conduit, pipe and the like, and/or the size and power of the heat exchangers, may be chosen depending on the mass flow of water to be provided to a piston pump or homogenizer.

Further, it should be noted that the heat exchangers described in relation to figures 1 and 2 can be designed with different configuration and different sizes in order to meet the needs specified e.g. by a food processing company. Moreover, in order to provide for efficient production the heat exchanger(s) can be built up in modules.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A heat exchanger arrangement for a dairy processing system, said heat exchanger arrangement being configured to provide process water to a piston pump or a homogenizer comprised in the dairy processing system, said heat exchanger arrangement comprising:
an inlet conduit for providing incoming water to the heat exchanger arrangement;
a first heat exchanger and a second heat exchanger;
said first heat exchanger being configured to heat said incoming water with sterilized water to provide intermediate water, and to cool the sterilized water with said incoming water to provide process water;
a first conduit fluidly connecting said first heat exchanger and said second heat exchanger for transporting the intermediate water from said first heat exchanger to said second heat exchanger;
a by-pass conduit fluidly connecting said inlet conduit and said first conduit;
said second heat exchanger being arranged to receive and heat said intermediate water to at least 121°C in order to provide the sterilized water;
a second conduit fluidly connecting said second heat exchanger and said first heat exchanger for transporting the sterilized water from said second heat exchanger to said first heat exchanger;
a third conduit fluidly connecting said first heat exchanger and the piston pump or homogenizer; and
wherein said heat exchanger arrangement further comprises:
an injection port arranged to inject condensate into in at least one of said inlet conduit, said by-pass conduit, and said third conduit, in order to reduce the amount of water and/or energy required to heat the incoming water and/or the intermediate water.

2. A heat exchanger arrangement according to claim 1, further comprising a holding cell arranged in fluid contact with the second conduit, said holding cell being configured to hold said sterilized water for a predetermined amount of time.

3. A heat exchanger arrangement according to claim 1 or 2, further comprising a third heat exchanger being configured to heat the water in said by-pass conduit by using the condensate.

4. A heat exchanger according to any one of the preceding claims, wherein the first heat exchanger is configured to cool the sterilized water to a temperature exceeding 75° C.

5. A heat exchanger according to claim 4, wherein the first heat exchanger is configured to cool the sterilized water to a temperature exceeding 75° C and below 110° C.

6. A method for providing process water to a piston pump or a homogenizer comprised in a dairy processing system, the method comprising the steps of:
directing a flow of incoming water through a first heat exchanger for heating the incoming water to provide a flow of intermediate water;
directing the flow of intermediate water through a second heat exchanger for heating the intermediate water to at least 121°C in order to provide a flow of sterilized water;
directing the flow of sterilized water through the first heat exchanger in order to cool the flow of sterilized water to provide process water; and
injecting condensate into at least one of the flow of incoming water, the flow of intermediate water, and the flow of process water.

7. A method according to claim 6, further comprising the step of directing at least a portion of the flow of incoming water to by-pass the first heat exchanger into the flow of intermediate water.

8. A method according to claim 6 or 7, wherein the step of injecting condensate comprises injecting condensate into the flow of process water after the first heat exchanger.

9. A method according to claim 6 or 7, wherein the step of injecting condensate comprises injecting the condensate into the flow of incoming water prior to the first heat exchanger.

10. A method according to claim 9, wherein the step of injecting condensate comprises injecting the condensate into the by-pass flow.

11. A method according to anyone of claims 6-10, wherein the condensate is sterilized condensate.

12. A method according to anyone of claims 6-11, wherein the condensate originates from at least one of a plate heat exchanger, a vacuum pump, a tubular heat exchanger as a pre-heater, a tubular heat exchanger as a cooler, and a tubular heat exchanger as final heater.

13. A method according to any one of claims 6-12, further comprising the step of holding the flow of sterilized water for a predetermined amount of time.
